# EUROPEAN PATENT APPLICATION

(11) **EP 4 697 175 A1**
(43) Date of publication of application: **18.02.2026**
(21) Application number: 24864120.1
(22) Date of filing: 30.05.2024
(51) Int. Cl.: G06F 11/22

(54) **MEMORY TESTING METHOD AND ELECTRONIC DEVICE**

(30) Priority: 14.09.2023 CN 202311190275
(71) Applicant: Huawei Technologies Co., Ltd., Shenzhen, Guangdong 518129 (CN)
(72) Inventor: CHEN, Ming, Shenzhen, Guangdong 518129 (CN); XIE, Bing, Shenzhen, Guangdong 518129 (CN)
(74) Representative: Maiwald GmbH
(86) International application number: PCT/CN2024/096500
(87) International publication number: WO 2025/055395

(57) **Abstract**

This application discloses a memory detection method and an electronic device. The method may include: The electronic device detects first memory occupied by a first process, where the first memory is a resident set size RSS; when the first memory is greater than a first threshold, the electronic device detects second memory occupied by the first process, where the second memory is a proportional set size PSS; and when the second memory is greater than the first threshold, the electronic device performs memory detection on the first process based on preset time. In this way, the electronic device first detects the RSS occupied by the first process. If the RSS occupied by the first process exceeds a memory quota (namely, the first threshold), the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

## Description

This application claims priority to Chinese Patent Application No. 202311190275.1, filed with the China National Intellectual Property Administration on September 14, 2023 and entitled "MEMORY DETECTION METHOD AND ELECTRONIC DEVICE", which is incorporated herein by reference in its entirety.

### TECHNICAL FIELD

This application relates to the field of memory management technologies, and in particular, to a memory detection method and an electronic device.

### BACKGROUND

Increasingly more applications (apps for short) are installed on an electronic device. When an application, that is, a process corresponding to the application, is running on an operating system of the electronic device, the process occupies resources of the electronic device. However, resources such as memory, central processing unit (central processing unit, CPU), and input/output (input/output, I/O) of the operating system of the electronic device are limited. Therefore, if resource usage of an application in the background is not controlled, resources that need to be called by an application in the foreground cannot be ensured.

Currently, measurement indicators of memory resources may include a resident set size (resident set size, RSS) and a proportional set size (proportional set size, PSS). The RSS may include memory occupied by a shared library. The PSS may include a proportional allocation of memory occupied by the shared library. In a memory detection process, to prevent applications from abusing resources in the background, the operating system of the electronic device sets a memory quota, an I/O quota, and the like for each process. For example, the memory quota allows foreground and background applications to occupy up to about 50% of memory of the electronic device. Then, the electronic device detects a PSS occupied by each process. However, a process of detecting the PSS occupied by each process is time-consuming. For example, it takes about 129 ms for the electronic device to detect PSSs occupied by 479 processes. To resolve a time consumption problem, the electronic device detects an RSS occupied by each process. The entire memory of the shared library is attributed to the application during RSS detection, resulting in inaccurate memory detection.

### SUMMARY

A memory detection method and an electronic device are provided in this application, to implement accurate memory detection and low time consumption

To achieve the foregoing objective, the following technical solutions are used in this application.

According to a first aspect, this application provides a memory detection method. The method may be performed by an electronic device, or may be performed by a component (for example, a chip, a chip system, or a processor) in the electronic device. The following uses an example in which the method is performed by the electronic device for description. The method may include: detecting first memory occupied by a first process, where the first memory is a resident set size RSS; when the first memory is greater than a first threshold, detecting second memory occupied by the first process, where the second memory is a proportional set size PSS; and when the second memory is greater than the first threshold, processing the first process.

In an example, the first process may be understood as a running process of a first application on the electronic device. The first process may include one or more processes.

In an example, the first threshold may be an upper limit of memory that can be used by the first process, and the memory is a memory quota of the first application. The memory quota may be memory configured by the electronic device for the first application when the electronic device is started.

In this way, the electronic device first detects the RSS occupied by the first process. If the RSS occupied by the first process exceeds the memory quota (namely, the first threshold), the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

In some technical solutions, the memory detection method provided in this application further includes: when the first memory is less than or equal to the first threshold, skipping performing an operation of detecting whether the second memory is greater than the first threshold. In other words, because the range of the RSS is larger than the range of the PSS, when detecting that the RSS occupied by the first process does not exceed the memory quota, the electronic device may determine that the PSS occupied by the first process does not exceed the memory quota either. In this way, the electronic device does not need to detect the PSS occupied by the first process, so that detection time is reduced, and time consumption for memory detection of the electronic device is reduced. In addition, accurate memory detection is implemented.

In some technical solutions, the memory detection method provided in this application further includes: when the second memory is less than or equal to the first threshold, ending the detection operation.

In some technical solutions, before detecting the first memory occupied by the first process, the memory detection method provided in this application further includes: determining device information of the electronic device and feature information of the first process, where the device information of the electronic device indicates a status of the electronic device, and the feature information of the first process indicates a status of the first process; and when the device information or the feature information changes, detecting the first memory occupied by the first process.

In a technical solution, the device information of the electronic device includes at least one of the following: a system status and a user operation status; and the feature information of the first process includes at least one of the following: a process status and a foreground/background status.

In a technical solution, the feature information of the first process includes the process status. Detecting the first memory occupied by the first process when the feature information changes may be specifically: detecting the first memory occupied by the first process when the process status is a non-suspended state.

In a technical solution, the feature information of the first process includes the foreground/background status. Detecting the first memory occupied by the first process when the feature information changes may be specifically: detecting the first memory occupied by the first process when the foreground/background status is a background state.

In a technical solution, the device information of the electronic device includes the system status. Detecting the first memory occupied by the first process when the device information changes may be specifically: detecting the first memory occupied by the first process when the system status is a non-idle state.

In a technical solution, the device information of the electronic device includes the user operation status. Detecting the first memory occupied by the first process when the device information changes may be specifically: detecting the first memory occupied by the first process when the user operation status is a no-operation state.

In this embodiment of this application, the electronic device determines, based on the status of the electronic device, whether to use the foregoing detection method to detect the memory occupied by the first process. In other words, the electronic device comprehensively considers various user scenarios, and accurately detects the memory of the process and reduces detection time consumption while ensuring minimum impact on the foreground.

In an example, for impact of each electronic device on the foreground, the electronic device may separately configure a determining sequence for the process status, the foreground/background status, the system status, and the user operation. In other words, the process status may have the greatest impact on the foreground, and the electronic device may determine the process status first. Next, the foreground/background status may have greater impact on the foreground, and the electronic device may then determine the foreground/background status. Then, the system status may have slightly smaller impact on the foreground, and the electronic device may determine the system status. Finally, the user operation may have minimum impact on the foreground, and the electronic device may determine the user operation. Certainly, this example merely provides an implementable solution, and embodiments of this application is not limited thereto.

In this embodiment of this application, the electronic device determines, based on the status of the electronic device and the impact of each status on the foreground, whether to use the foregoing detection method to detect the memory occupied by the first process. In other words, the electronic device comprehensively considers various user scenarios and the impact of each status on the foreground, to accurately detect the memory of the process and reduce detection time consumption while ensuring minimum impact on the foreground.

In a technical solution, the first threshold is a memory quota of the first process. In other words, the first threshold is the memory quota of the first application.

In a technical solution, processing the first process may be specifically: when the second memory is greater than the first threshold, performing memory detection on the first process at a preset time interval; and when a quantity of times of performing memory detection on the first process is greater than a second threshold, reporting the memory occupied by the first process.

In a technical solution, processing the first process may be specifically: when the second memory is greater than the first threshold, killing the first process.

That the electronic device kills the first process may be understood as that the electronic device stops the first process. In other words, the electronic device does not run the first process. Certainly, in this embodiment of this application, processing performed by the electronic device on the first process is not limited to killing the first process, and may further include adjusting the memory quota of the first process, and the like. This is not specifically limited in embodiments of this application.

According to a second aspect, this application provides a memory detection method. The method may be performed by an electronic device, or may be performed by a component (for example, a chip, a chip system, or a processor) in the electronic device. The following uses an example in which the method is performed by the electronic device for description. The method may include: detecting first memory occupied by a first process, where the first memory is a resident set size RSS; and if the first memory is less than or equal to a first threshold, skipping performing an operation of detecting whether second memory is greater than the first threshold.

In this way, the electronic device first detects the RSS occupied by the first process. If the RSS occupied by the first process does not exceed a memory quota (namely, the first threshold), the electronic device does not detect a PSS occupied by the first process. Because a range of the RSS is larger than a range of the PSS, when the electronic device detects that the RSS occupied by the first process does not exceed the memory quota, it indicates that the PSS occupied by the first process definitely does not exceed the memory quota either. In this case, the PSS occupied by the first process does not need to be detected, so that detection time is reduced, and time consumption for memory detection of the electronic device is reduced.

According to a third aspect, this application provides a memory detection method. The method may be performed by an electronic device, or may be performed by a component (for example, a chip, a chip system, or a processor) in the electronic device. The following uses an example in which the method is performed by the electronic device for description. The method may include: detecting first memory occupied by a first process, where the first memory is a resident set size RSS; when the first memory is greater than a first threshold, detecting second memory occupied by the first process, where the second memory is a proportional set size PSS; and when the second memory is less than or equal to the first threshold, ending the detection operation.

In this way, the electronic device first detects the RSS occupied by the first process. If the RSS occupied by the first process exceeds a memory quota (namely, the first threshold), the electronic device then detects the PSS occupied by the first process. Because a range of the RSS is larger than a range of the PSS, the electronic device detects that the RSS occupied by the first process exceeds the memory quota, and further detects that the PSS occupied by the first process does not exceed the memory quota. This indicates that a memory resource occupied by the first process meets a requirement, and no detection operation needs to be performed.

According to a fourth aspect, this application provides an electronic device. The electronic device includes a detection module and a processing module. The detection module is configured to detect first memory occupied by a first process, where the first memory is a resident set size RSS. The detection module is configured to: when the first memory is greater than a first threshold, detect second memory occupied by the first process, where the second memory is a proportional set size PSS. The processing module is configured to process the first process when the second memory is greater than the first threshold.

In an example, the first process may be understood as a running process of a first application on the electronic device. The first process may include one or more processes.

In an example, the first threshold may be an upper limit of memory that can be used by the first process, and the memory is a memory quota of the first application. The memory quota may be memory configured by the electronic device for the first application when the electronic device is started.

In this way, the electronic device first detects the RSS occupied by the first process. If the RSS occupied by the first process exceeds the memory quota (namely, the first threshold), the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

In some technical solutions, the electronic device further includes an execution module. The execution module is configured to: when the first memory is less than or equal to the first threshold, skip performing an operation of detecting whether the second memory is greater than the first threshold. In other words, because the range of the RSS is larger than the range of the PSS, when detecting that the RSS occupied by the first process does not exceed the memory quota, the electronic device may determine that the PSS occupied by the first process does not exceed the memory quota either. In this way, the electronic device does not need to detect the PSS occupied by the first process, so that detection time is reduced, and time consumption for memory detection of the electronic device is reduced. In addition, accurate memory detection is implemented.

In a technical solution, the detection module is configured to: when the second memory is less than or equal to the first threshold, end the detection operation.

In some technical solutions, the electronic device further includes a determining module. The determining module is configured to determine device information of the electronic device and feature information of the first process, where the device information of the electronic device indicates a status of the electronic device, and the feature information of the first process indicates a status of the first process. The detection module is configured to: when the device information or the feature information changes, detect the first memory occupied by the first process.

In a technical solution, the device information of the electronic device includes at least one of the following: a system status and a user operation status; and the feature information of the first process includes at least one of the following: a process status and a foreground/background status.

In a technical solution, the feature information of the first process includes the process status. The detection module is configured to: when the process status is a non-suspended state, detect the first memory occupied by the first process.

In a technical solution, the feature information of the first process includes the foreground/background status. The detection module is configured to: when the foreground/background status is a background state, detect the first memory occupied by the first process.

In a technical solution, the device information of the electronic device includes the system status. The detection module is configured to: when the system status is a non-idle state, detect the first memory occupied by the first process.

In a technical solution, the device information of the electronic device includes the user operation status. The detection module is configured to: when the user operation status is a no-operation state, detect the first memory occupied by the first process.

In this embodiment of this application, the electronic device determines, based on the status of the electronic device, whether to use the foregoing detection method to detect the memory occupied by the first process. In other words, the electronic device comprehensively considers various user scenarios, and accurately detects the memory of the process and reduces detection time consumption while ensuring minimum impact on the foreground.

In a technical solution, the first threshold is a memory quota of the first process.

In a technical solution, the processing module is configured to: when the second memory is greater than the first threshold, perform memory detection on the first process at a preset time interval; and when a quantity of times of performing memory detection on the first process is greater than a second threshold, report the memory occupied by the first process.

In a technical solution, the processing module is configured to: when the second memory is greater than the first threshold, kill the first process.

That the electronic device kills the first process may be understood as that the electronic device stops the first process. In other words, the electronic device does not run the first process. Certainly, in this embodiment of this application, processing performed by the electronic device on the first process is not limited to killing the first process, and may further include adjusting the memory quota of the first process, and the like. This is not specifically limited in embodiments of this application.

According to a fifth aspect, this application provides an electronic device. The electronic device includes one or more processors and a storage. The storage stores code, and when the code is executed by the processor, the electronic device is enabled to perform the method according to the first aspect.

According to a sixth aspect, this application provides a computer-readable storage medium, including computer instructions. When the computer instructions are run on an electronic device, the electronic device is enabled to perform the method according to the first aspect.

For specific implementations and corresponding technical effect of the second aspect to the sixth aspect, refer to specific implementations and technical effect of the first aspect.

### BRIEF DESCRIPTION OF DRAWINGS

FIG. 1 is a diagram of time consumption in a memory detection process;
FIG. 2 is a diagram of time consumption in another memory detection process;
FIG. 3 is a diagram of a structure of an electronic device according to an embodiment of this application;
FIG. 4 is a diagram of another structure of an electronic device according to an embodiment of this application;
FIG. 5 is a schematic flowchart of a memory detection method according to an embodiment of this application;
FIG. 6 is another schematic flowchart of a memory detection method according to an embodiment of this application;
FIG. 7 is still another schematic flowchart of a memory detection method according to an embodiment of this application;
FIG. 8 is yet another schematic flowchart of a memory detection method according to an embodiment of this application;
FIG. 9 is still yet another schematic flowchart of a memory detection method according to an embodiment of this application; and
FIG. 10 is a diagram of still another structure of an electronic device according to an embodiment of this application.

### DESCRIPTION OF EMBODIMENTS

The following describes technical solutions in embodiments of this application with reference to accompanying drawings in embodiments of this application. In the descriptions of this application, unless otherwise specified, "/" indicates that associated objects are in an "or" relationship. For example, A/B may represent A or B. In this application, "or" is merely an association relationship for describing associated objects, and indicates that three relationships may exist. For example, A or B may indicate that only A exists, both A and B exist, and only B exists. A and B may be singular or plural. In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner for ease of understanding.

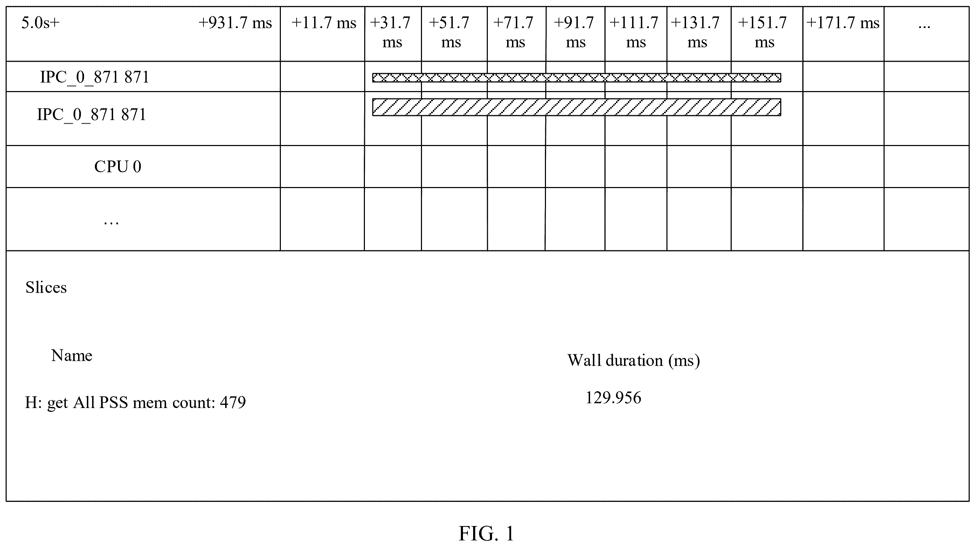

Measurement indicators of memory resources of an electronic device may include a resident set size (resident set size, RSS) and a proportional set size (proportional set size, PSS). The RSS may include memory occupied by a shared library. The PSS may include a proportional allocation of memory occupied by the shared library. To prevent memory resources from being abused by an application on the electronic device, the electronic device configures a memory quota for each application. When an application on the electronic device is running, the electronic device detects a PSS occupied by each process. However, a process of detecting the PSS occupied by each process is time-consuming. As shown in FIG. 1, it takes about 129 ms for the electronic device to detect PSSs occupied by 479 processes.

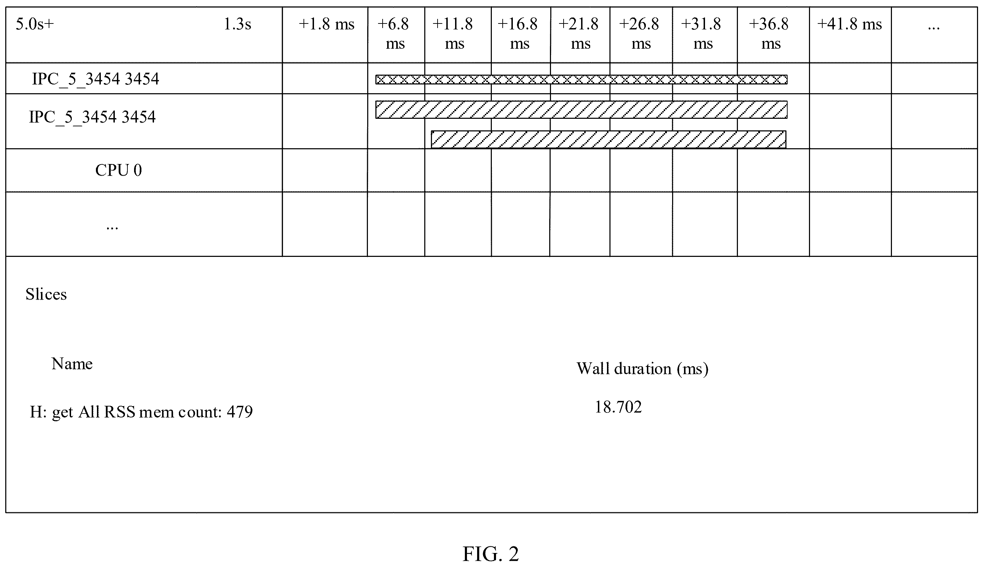

To resolve a time consumption problem, the electronic device detects an RSS occupied by each process. As shown in FIG. 2, it takes about 18 ms for the electronic device to detect RSSs occupied by the 479 processes. This significantly reduces time consumption. However, in a process of detecting the RSS occupied by each process, the electronic device attributes the entire memory of the shared library to each process. For example, the electronic device configures a memory quota of 2048 M for each application, and correspondingly, memory that can be used by a process corresponding to each application is 2048 M. Private memory occupied by a process A is 2050 M, private memory occupied by a process B is 50 M, and shared memory occupied by the process A and the process B is 8 M. In this case, when the electronic device detects the RSS occupied by each process, the electronic device determines that an RSS occupied by the process A is 2050 M+8 M=2058 M, and memory occupied by the process B is 50 M+8 M=58 M. Therefore, in a process of detecting the RSS occupied by each process, the electronic device attributes the entire memory of the shared library to each process, resulting in inaccurate memory detection.

To resolve the foregoing technical problem, an embodiment of this application provides a memory detection method. The method is applied to an electronic device. A first application is installed on the electronic device. The first application is running, that is, a first process is running. The first process may include one or more processes. The method may include: The electronic device detects first memory occupied by the first process, where the first memory is a resident set size RSS; when the first memory is greater than a first threshold, the electronic device detects second memory occupied by the first process, where the second memory is a proportional set size PSS; and when the second memory is greater than the first threshold, the electronic device performs memory detection on the first process based on preset time. In this way, the electronic device first detects the RSS occupied by the first process. If the RSS occupied by the first process exceeds a memory quota (namely, the first threshold), the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

In some embodiments, the method may further include: When the first memory is less than or equal to the first threshold, the electronic device skips performing an operation of detecting whether the second memory is greater than the first threshold. In other words, because the range of the RSS is larger than the range of the PSS, when detecting that the RSS occupied by the first process does not exceed the memory quota, the electronic device may determine that the PSS occupied by the first process does not exceed the memory quota either. In this way, the electronic device does not need to detect the PSS occupied by the first process, so that detection time is reduced, and time consumption for memory detection of the electronic device is reduced. In addition, accurate memory detection is implemented.

The foregoing example is still used. The memory quota configured by the electronic device for each application is 2048 M. In other words, an upper limit of memory that can be used by a process corresponding to the application is 2048 M. The private memory occupied by the process A is 2050 M, the private memory occupied by the process B is 50 M, and the shared memory occupied by the process A and the process B is 8 M.

For the process A, it is detected that the memory occupied by the process A is A_RSS=2050 M+8 M=2058 M, which exceeds the memory quota 2048 M. Then, A_PSS=2050 M+8/2 M=2054 M is collected, which exceeds the memory quota 2048 M. Therefore, the electronic device performs memory detection on the first process based on the preset time. Then, the electronic device may kill the first process. Therefore, according to the method provided in this embodiment of this application, the electronic device first detects whether the RSS occupied by the process A exceeds the memory quota. If the RSS occupied by the process A does not exceed the memory quota, the electronic device does not need to detect whether the PSS occupied by the process A exceeds the memory quota. If the RSS occupied by the process A exceeds the memory quota, the electronic device further detects whether the PSS occupied by the process A exceeds the memory quota. Because the range of the RSS is larger than the range of the PSS, the electronic device filters out most processes by detecting the RSS occupied by the process A, to improve memory detection accuracy.

For the process B, the memory occupied by the process B is B_RSS=50 M+8 M=58 M, which does not exceed the memory quota 2048 M. Therefore, the process B is filtered out and PSS detection is not performed on the process B. In other words, a PSS memory detection procedure of the process B is omitted, and time is saved. Therefore, according to the method provided in this embodiment of this application, because the range of the RSS is larger than the range of the PSS, the electronic device filters out most processes by detecting the RSS occupied by the process B. In other words, that the electronic device detects that the RSS occupied by the process B does not exceed the memory quota means that the PSS occupied by the process B does not exceed the memory quota either. In this way, the electronic device does not need to detect the PSS occupied by the process B, so that detection time is reduced, and time consumption for memory detection of the electronic device is reduced. In addition, accurate memory detection is implemented.

In some actual use scenarios, time in which the electronic device detects memory resources occupied by the 479 processes may be optimized from 129 ms to 2 ms, and overheads are reduced by nearly 98.4%. This significantly reduces time consumption, and implements accurate memory detection.

Certainly, this embodiment of this application is not limited to memory detection performed by the electronic device on the first process. The electronic device may alternatively detect a resource that is of the electronic device and that is called by the first process. For example, the electronic device detects a resource (for example, a called interface (for example, I/O) or a CPU resource) called by the first process. In this embodiment of this application, an example in which the electronic device detects the memory of the process is used for detailed description.

The electronic device may be a device like a mobile phone, a tablet computer, a laptop computer, a notebook computer, an ultra-mobile personal computer (Ultra-mobile Personal Computer, UMPC), a handheld computer, a netbook, a personal digital assistant (Personal Digital Assistant, PDA), or a wearable electronic device. A specific form of the electronic device is not specially limited in embodiments of this application.

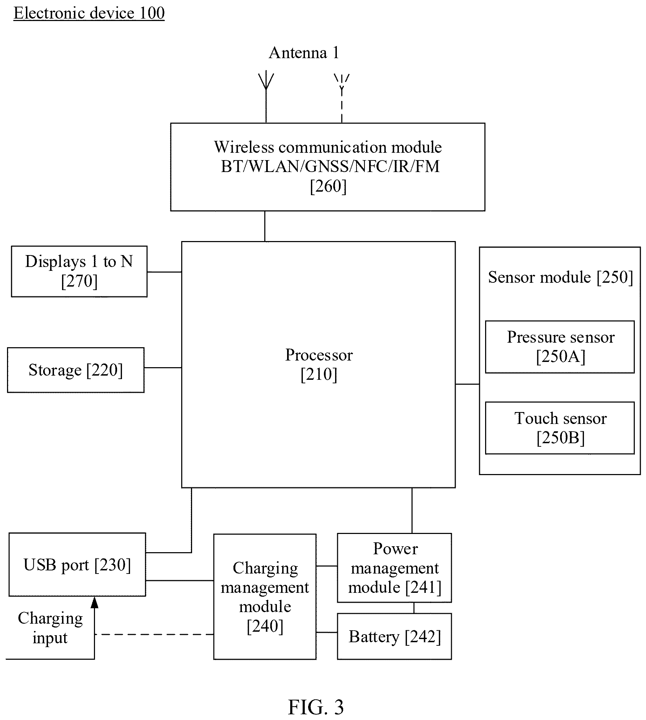

FIG. 3 is a block diagram of a structure of the foregoing electronic device.

As shown in FIG. 3, an electronic device 100 may include a processor 210, a storage 220, a universal serial bus (universal serial bus, USB) port 230, a charging management module 240, a power management module 241, a battery 242, an antenna 1, a wireless communication module 260, a display 270, a sensor module 250, and the like. The sensor module 250 may include a pressure sensor 250A, a touch sensor 250B, and the like.

It may be understood that the structure shown in this embodiment of this application does not constitute a specific limitation on the electronic device. In some other embodiments of this application, the electronic device may include more or fewer components than those shown in the figure, or a combination of a part of the components, or splits from a part of the components, or an arrangement of different components. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural network processing unit (neural-network processing unit, NPU), or the like. Different processing units may be independent components, or may be integrated into one or more processors.

The controller may generate an operation control signal based on an instruction operation code and a time sequence signal, to complete control of instruction reading and instruction execution.

A storage may be further disposed in the processor 210, and is configured to store instructions and data. In some embodiments, the storage in the processor 210 is a cache. The storage may store instructions or data just used or cyclically used by the processor 210. If the processor 210 needs to use the instructions or the data again, the processor may directly invoke the instructions or the data from the storage. This avoids repeated access, reduces waiting time of the processor 210, and therefore improves system efficiency.

In an embodiment, the electronic device is started. In this case, a first application on the electronic device is running, that is, the first process is running. The processor 210 of the electronic device configures a memory quota for the first application. When the application runs, an upper limit of memory that can be used by a process corresponding to the application is the memory quota. The processor 210 of the electronic device identifies device information of the electronic device and feature information of the first process. The processor 210 of the electronic device determines whether the device information or the feature information changes. When the device information or the feature information changes, the processor 210 detects an RSS occupied by the first process. When the RSS occupied by the first process exceeds the memory quota, the processor 210 detects whether a PSS occupied by the first process exceeds the memory quota. When it is detected that the PSS occupied by the first process exceeds the memory quota, the processor 210 kills the first process.

The charging management module 240 is configured to receive a charging input from a charger. The charger may be a wireless charger or a wired charger. In some embodiments of wired charging, the charging management module 240 may receive a charging input of the wired charger through the USB port 230. In some embodiments of wireless charging, the charging management module 240 may receive a wireless charging input through a wireless charging coil of the electronic device. When charging the battery 242, the charging management module 240 may further supply power to the electronic device via the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, the display 270, the camera 293, the wireless communication module 260, and the like. The power management module 241 may be further configured to monitor parameters such as a battery capacity, a quantity of battery cycles, and a battery health status (electric leakage and impedance). In some other embodiments, the power management module 241 may alternatively be disposed in the processor 210. In some other embodiments, the power management module 241 and the charging management module 240 may alternatively be disposed in a same component.

A wireless communication function of the electronic device may be implemented through the antenna 1, the wireless communication module 260, the modem processor, the baseband processor, and the like.

The antenna 1 is configured to transmit and receive electromagnetic wave signals. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The wireless communication module 260 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 260 may be one or more components integrating at least one communication processing module. The wireless communication module 260 receives an electromagnetic wave through the antenna 1, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 1. In some embodiments, the wireless communication module 260 receives an application message sent by a server.

The electronic device implements a display function via the GPU, the display 270, the application processor, and the like. The GPU is a microprocessor for image processing, and connects the display 270 and the application processor. The GPU is configured to: perform mathematical and geometric computation, and render an image. The processor 210 may include one or more GPUs that execute program instructions to generate or change displayed information.

The display 270 is configured to display an image, a video, and the like. The display 270 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device may include one or N displays 270, where N is a positive integer greater than 1.

The storage 220 may be configured to store computer-executable program code. The executable program code includes instructions. The storage 220 may include a program storage area and a data storage area. The program storage area may store an operating system, an application required by at least one function (for example, a voice playing function or an image playing function), and the like. The data storage area may store data (for example, audio data and a phone book) created when the electronic device is used, and the like. In addition, the storage 220 may include a high-speed random access memory, and may further include a non-volatile memory, for example, at least one magnetic disk storage component, a flash memory component, or a universal flash storage (universal flash storage, UFS). The processor 210 runs the instructions stored in the storage 220 and/or the instructions stored in the storage disposed in the processor, to perform various function applications and data processing of the electronic device.

The pressure sensor 250A is configured to sense a pressure signal, and may convert the pressure signal into an electrical signal. In some embodiments, the pressure sensor 250A may be disposed on the display 270. There are many types of pressure sensors 250A, for example, a resistive pressure sensor, an inductive pressure sensor, and a capacitive pressure sensor. The capacitive pressure sensor may include at least two parallel plates made of conductive materials. When a force acts on the pressure sensor 250A, capacitance between electrodes changes. The electronic device determines a pressure strength based on the change of the capacitance. When a touch operation is performed on the display 270, the electronic device detects intensity of the touch operation via the pressure sensor 250A. The electronic device may also calculate a touch location based on a detection signal of the pressure sensor 250A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing the Messages is performed. When a touch operation whose touch operation intensity is greater than or equal to the first pressure threshold is performed on the Messages application icon, an instruction for creating a new message is performed.

In an embodiment, the pressure sensor 250A may detect an operation like tapping or sliding performed by a user on the display 270 of the electronic device 100, and obtain operation information. The pressure sensor 250A sends the operation information to the processor 210. The processor 210 may determine, based on the operation information, that there is a user operation. In this case, the processor 210 may not detect memory occupied by the first process. The processor 210 may determine, based on the operation information, that there is no user operation. In this case, the processor 210 may detect the memory occupied by the first process.

The touch sensor 250B is also referred to as a "touch device". The touch sensor 250B may be disposed on the display 270. The touch sensor 250B and the display 270 form a touchscreen, which is also referred to as a "touch screen". The touch sensor 250B is configured to detect a touch operation performed on or near the touch sensor. The touch sensor may transfer the detected touch operation to the application processor to determine a touch event type. A visual output related to the touch operation may be provided on the display 270. In some other embodiments, the touch sensor 250B may alternatively be disposed on a surface of the electronic device at a location different from that of the display 270.

In an embodiment, the touch sensor 250B may detect an operation like tapping or sliding performed by the user on the display 270 of the electronic device 100, and obtain operation information. The touch sensor 250B sends the operation information to the processor 210. The processor 210 may determine, based on the operation information, that there is a user operation. In this case, the processor 210 may not detect memory occupied by the first process. The processor 210 may determine, based on the operation information, that there is no user operation. In this case, the processor 210 may detect the memory occupied by the first process.

Certainly, the electronic device may further include another functional unit. This is not limited in embodiments of this application.

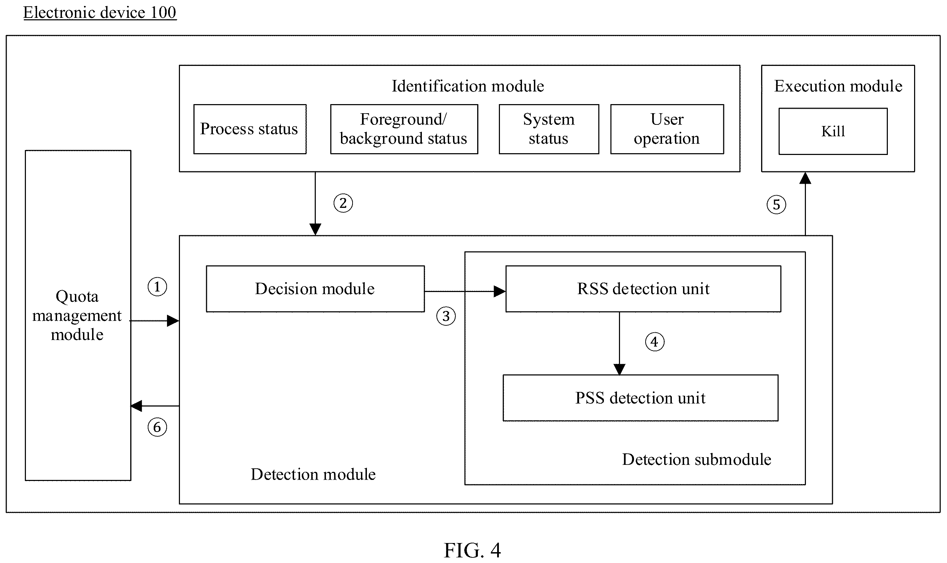

FIG. 4 is a block diagram of another structure of the foregoing electronic device.

As shown in FIG. 4, the electronic device 100 may include a quota management module, an identification module, a detection module, and an execution module. For example, the quota management module, the identification module, the detection module, and the execution module may be deployed on the processor 210 shown in FIG. 3. The quota management module is configured to record memory occupied by each process on the electronic device, for example, a memory quota of each process. The identification module is configured to identify a status of the electronic device, for example, a status of each process on the electronic device, a foreground/background status of each process, a status of the operating system of the electronic device, and an interface operation performed by the user on the electronic device. The detection module is configured to detect an RSS occupied by each process, and detect a PSS occupied by a process when the RSS occupied by each process exceeds the memory quota. The detection module is specifically configured to determine, based on the status of the electronic device (for example, the device information of the electronic device and the feature information of the first process) identified by the identification module, whether to detect the RSS occupied by each process. The execution module is configured to kill each process based on a detection result of the detection module. In some examples, the execution module may be further configured to add a memory quota when an RSS occupied by a process exceeds the memory quota. The detection module may include a decision module and a detection submodule. The decision module is configured to determine, based on the status of the electronic device identified by the identification module, whether the status of the electronic device changes. The detection submodule is configured to: when the status of the electronic device changes, detect the RSS occupied by each process; and when the RSS occupied by each process exceeds the memory quota, detect the PSS occupied by the process.

In an example, as shown in FIG. 4, a working procedure of the electronic device 100 is as follows: Step ①: The electronic device is started. In this case, the first application on the electronic device is running, that is, the first process is running. The quota management module of the electronic device configures a memory quota for an application. When the application runs, an upper limit of memory that can be used by a process corresponding to the application is the memory quota. Step ②: The identification module of the electronic device identifies the status of the electronic device (for example, the device information of the electronic device and the feature information of the first process). Step ③: The decision module of the electronic device determines, based on the status of the electronic device identified by the identification module, whether the status of the electronic device changes. Step ④: When the status of the electronic device changes, the detection submodule detects the RSS occupied by the first process. When the RSS occupied by the first process exceeds the memory quota, the detection submodule detects whether the PSS occupied by the first process exceeds the memory quota. Step ⑤: When it is detected that the PSS occupied by the first process exceeds the memory quota, the execution module of the electronic device kills the first process. In this case, the detection module of the electronic device reports the memory occupied by the first process to the quota management module.

In this way, the electronic device first detects the RSS occupied by the first process. If the RSS occupied by the first process exceeds the memory quota, the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

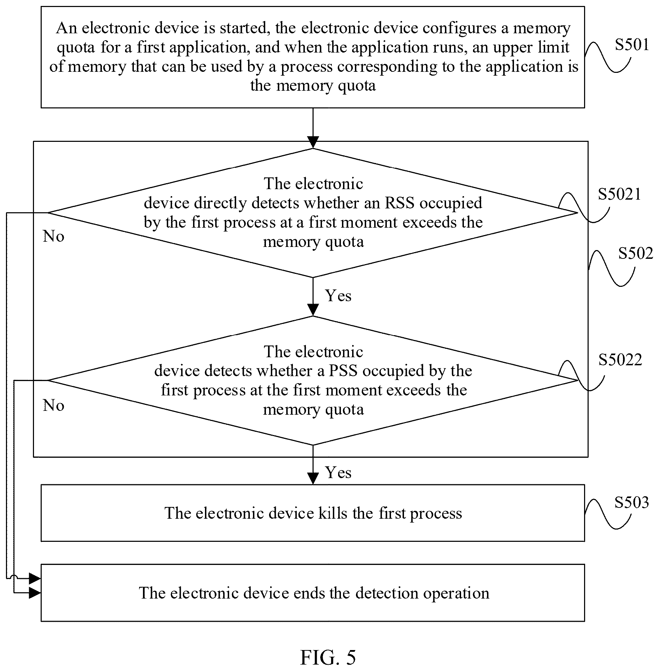

FIG. 5 is a schematic flowchart of a memory detection method according to an embodiment of this application. As shown in FIG. 5, the method is applied to an electronic device, and a first application is installed on the electronic device. The method may include S501 to S504 (some steps are optional). For details of S501 to S504, refer to descriptions in the following embodiments. Details may be as follows:
S501: The electronic device is started, the electronic device configures a memory quota for the first application, and when the application runs, an upper limit of memory that can be used by a process corresponding to the application is the memory quota.

That the electronic device is started may be understood as that the electronic device is in a power-on state. Specifically, an implementation of starting the electronic device may be that the electronic device performs a power-on operation in response to receiving the power-on operation of a user.

In other words, after the electronic device is started, a plurality of applications may run on the electronic device, and each application corresponds to one process. These processes occupy resources of the electronic device, for example, memory. To prevent resources of the electronic device from being abused by these processes, the electronic device may preconfigure a memory quota for the applications corresponding to these processes.

The first process may be understood as a running process of the first application on the electronic device.

The memory quota may be memory preset for the first application. For example, the memory quota of the first application may be 2048 M or 50 M. Certainly, setting of the memory quota needs to be determined based on an actual situation. This is not specifically limited in embodiments of this application.

In a specific implementation, S501 may be specifically implemented as follows: After the electronic device is started, the electronic device receives a memory quota that is of each process and that is pushed by a server. Specifically, the electronic device may receive, in real time, the memory quota that is of each process and that is pushed by the server. Alternatively, the electronic device may receive, at a first preset time interval, the memory quota that is of each process and that is pushed by the server. The first preset time interval may be set based on an actual situation, for example, one hour or one day. This is not specifically limited in embodiments of this application. In an example, S501 may be specifically implemented as follows: After the electronic device is started, a quota management module of the electronic device receives the memory quota that is of each process and that is pushed by the server. Then, the electronic device performs Step ① shown in FIG. 4 in which the quota management module of the electronic device sends the memory quota of each process to the detection module of the electronic device.

In another specific implementation, S501 may be specifically implemented as follows: After the electronic device is started, the electronic device sends, to the server, a request for obtaining the memory quota of each process. Correspondingly, the server receives the request, and obtains the memory quota of each process based on the request. Then, the server sends the memory quota of each process to the electronic device. Specifically, the electronic device may send, to the server in real time, the request for obtaining the memory quota of each process. Alternatively, the electronic device may send, to the server at a second preset time interval, the request for obtaining the memory quota of each process. The second preset time interval may be set based on an actual situation, for example, one hour or one day. This is not specifically limited in embodiments of this application. Alternatively, in response to a user operation, the electronic device sends, to the server, the request for obtaining the memory quota of each process. The user operation may include an operation of tapping a power button of the electronic device by the user, or an operation of tapping a screen-off button by the user, or the like. This is not specifically limited in embodiments of this application. In an example, S501 may be specifically implemented as follows: After the electronic device is started, the quota management module of the electronic device sends, to the server, the request for obtaining the memory quota of each process. Correspondingly, the server receives the request, and obtains the memory quota of each process based on the request. Then, the server sends the memory quota of each process to the quota management module of the electronic device. Then, the electronic device performs Step ① shown in FIG. 4 in which the quota management module of the electronic device sends the memory quota of each process to the detection module of the electronic device.

After the electronic device performs S501 in which the electronic device configures the memory quota for the first application corresponding to the first process, the electronic device performs S502 in which the electronic device determines, based on the memory that can be used by the first process, whether memory occupied by the first process at a first moment exceeds the first memory. The first moment may be understood as a moment at which the electronic device detects the memory occupied by the first process. The first memory may be understood as predefined memory, and a size of the memory may be set based on an actual situation. During a specific implementation, the first memory may be the memory quota of the first process. In this embodiment of this application, an example in which the first memory is the memory quota of the first process is used for description. In some examples, the electronic device may directly detect the memory occupied by the first process at the first moment, or may detect, under triggering of another condition, the memory occupied by the first process at the first moment. The following provides detailed descriptions in different cases.

Case 1: The electronic device directly detects the memory occupied by the first process at the first moment. As shown in FIG. 5, S502 may be specifically implemented as follows:
S5021: The electronic device directly detects whether an RSS occupied by the first process at the first moment exceeds the memory quota. If the RSS occupied by the first process exceeds the memory quota, the electronic device performs S5022. If the RSS occupied by the first process does not exceed the memory quota, the electronic device ends the detection operation.

In a specific implementation, for a specific implementation of S5021, refer to an RSS detection unit shown in FIG. 4. The RSS detection unit is configured to detect whether the RSS occupied by the first process at the first moment exceeds the memory quota. When the RSS detection unit detects that the RSS occupied by the first process exceeds the memory quota, the electronic device performs Step ④ shown in FIG. 4.

The foregoing example is still used. The memory quota configured by the electronic device for each application is 2048 M, and correspondingly, the memory that can be used by the process corresponding to each application is 2048 M. Private memory occupied by a process A is 2050 M, private memory occupied by a process B is 50 M, and shared memory occupied by the process A and the process B is 8 M. In this case:
Example 1: It is assumed that the first process is the process A. The electronic device detects that the RSS occupied by the first process is A_RSS=2050 M+8 M=2058 M, which exceeds the memory quota 2048 M. In this case, the electronic device performs S5022.
Example 2: It is assumed that the first process is the process B. The electronic device detects that the RSS occupied by the first process is: B_RSS=50 M+8 M=58 M, which does not exceed the memory quota 2048 M. In this case, the electronic device ends the detection operation.

In this way, the electronic device can filter out nearly 99% of processes by detecting RSSs occupied by the processes. PSS detection needs to be performed on only remaining 1% processes, which greatly reduces power consumption. In actual application, time in which the electronic device detects memory resources occupied by 479 processes may be optimized from 129 ms to 2 ms, and overheads are reduced by nearly 98.4%. This significantly reduces time consumption, and implements accurate memory detection.

Certainly, the foregoing examples are merely used to describe the solutions in embodiments of this application. Therefore, embodiments of this application are not limited to the foregoing examples. Details are not listed herein.

In this embodiment of this application, because a range of an RSS is larger than a range of a PSS, the electronic device first detects the RSS occupied by the first process. If the RSS occupied by the first process does not exceed the memory quota, it means that a PSS occupied by the first process does not exceed the memory quota either. In this way, the electronic device does not need to detect the PSS occupied by the first process, and a PSS memory detection procedure of the first process is omitted. This reduces detection time, and reduces time consumption for memory detection of the electronic device.

S5022: The electronic device detects whether a PSS occupied by the first process at the first moment exceeds the memory quota. If the PSS occupied by the first process exceeds the memory quota, the electronic device performs S503. If the PSS occupied by the first process does not exceed the memory quota, the electronic device ends the detection operation.

In a specific implementation, for a specific implementation of S5022, refer to the PSS detection unit shown in FIG. 4. The PSS detection unit is configured to detect whether the PSS occupied by the first process at the first moment exceeds the memory quota. When the PSS detection unit detects that the PSS occupied by the first process exceeds the memory quota, the electronic device performs Step ⑤ shown in FIG. 4, or the electronic device performs Step ⑥ and Step ⑤ shown in FIG. 4.

The foregoing Example 1 is still used. The electronic device further detects the PSS occupied by the first process. The electronic device detects that the RSS occupied by the first process is A_PSS=2050 M+8/2 M=2054 M, which exceeds the memory quota 2048 M. In this case, the electronic device determines that the memory occupied by the first process exceeds the memory quota.

In this embodiment of this application, the electronic device first detects the RSS occupied by the first process. If the RSS occupied by the first process exceeds the memory quota, the electronic device then detects the PSS occupied by the first process. Because the range of the RSS is larger than the range of the PSS, the electronic device filters out most processes by detecting the RSS occupied by the first process, and then accurately locates, by detecting the PSS occupied by the first process, a process whose memory exceeds a quota. This reduces detection time and improves memory detection accuracy.

The electronic device determines that the memory occupied by the first process exceeds the memory quota. Then, the electronic device may perform S503. Details are as follows:
S503: The electronic device kills the first process.

That the electronic device kills the first process may be understood as that the electronic device stops the first process. In other words, the electronic device does not run the first process. Certainly, in this embodiment of this application, processing performed by the electronic device on the first process is not limited to killing the first process, and may further include adjusting the memory quota of the first process, and the like. This is not specifically limited in embodiments of this application. In this embodiment of this application, an example in which the electronic device kills the first process is used for description.

In a specific implementation, as shown in FIG. 5, S503 may be specifically implemented as follows: When the electronic device determines that the memory occupied by the first process exceeds the memory quota, the electronic device kills the first process. In other words, the electronic device may directly kill the first process based on a detection result that the memory occupied by the first process exceeds the memory quota. Specifically, for a specific implementation of S503, refer to Step ⑤ shown in FIG. 4. Details are not described herein again.

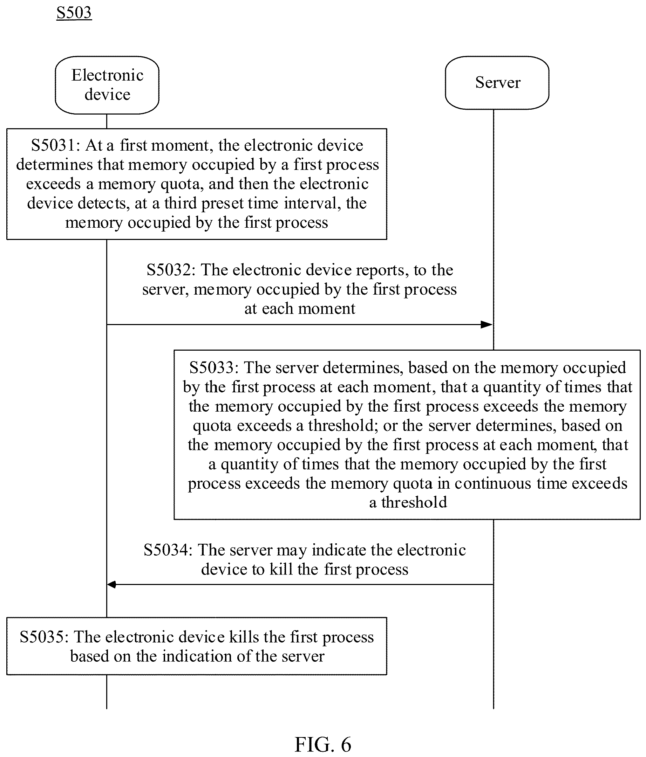

In another specific implementation, as shown in FIG. 6, S503 may be specifically implemented as follows: S5031: At the first moment, the electronic device determines that the memory occupied by the first process exceeds the memory quota, and then the electronic device detects, at a third preset time interval, the memory occupied by the first process. The third preset time interval may be set based on an actual situation. For example, the third preset time interval is one hour or one day. This is not specifically limited in embodiments of this application. In addition, S5032: The electronic device reports, to the server, the memory occupied by the first process at each moment. S5033: The server determines, based on the memory occupied by the first process at each moment, that a quantity of times that the memory occupied by the first process exceeds the memory quota exceeds a threshold. The threshold may be 3 or 6. This is not specifically limited in this application. For example, the electronic device detects, for three consecutive times, that the memory occupied by the first process exceeds the memory quota. Alternatively, the server determines, based on the memory occupied by the first process at each moment, that a quantity of times that memory occupied by the first process exceeds the memory quota in continuous time exceeds a threshold. For example, it is detected, for three consecutive times within four consecutive hours, that the memory occupied by the first process exceeds the memory quota. In this case, in S5034, the server may indicate the electronic device to kill the first process. S5035: The electronic device kills the first process based on the indication of the server. Specifically, for a specific implementation of S503, refer to Step ⑥ and Step ⑤ shown in FIG. 4. Details are not described herein again.

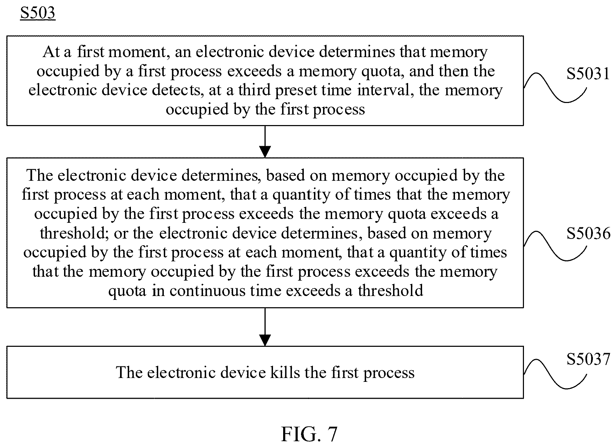

In still another specific implementation, as shown in FIG. 7, S503 may be specifically implemented as follows: S5031: At the first moment, the electronic device determines that the memory occupied by the first process exceeds the memory quota, and then the electronic device detects, at a third preset time interval, the memory occupied by the first process. The third preset time interval is the same as the foregoing related descriptions, and details are not described herein again. S5036: The electronic device determines, based on memory occupied by the first process at each moment, that a quantity of times that the memory occupied by the first process exceeds the memory quota exceeds a threshold. Alternatively, the electronic device determines, based on memory occupied by the first process at each moment, that a quantity of times that the memory occupied by the first process exceeds the memory quota in continuous time exceeds a threshold. Specifically, for a specific implementation of S5036, refer to related descriptions in S5033. Details are not described herein again. In this case, in S5037, the electronic device kills the first process. Specifically, for a specific implementation of S503, refer to Step ⑥ and Step ⑤ shown in FIG. 4. Details are not described herein again.

Case 2: The electronic device detects, under triggering of another condition, the memory occupied by the first process at the first moment.

The another condition may be understood as a condition for triggering detection of the memory occupied by the first process. The condition may include a condition for changing a status of the electronic device. In an example, the status of the electronic device may include at least one of the following: a process status of a process in the electronic device, a foreground or background status of the process in the electronic device (a foreground/background status for short), a status of an operating system of the electronic device (a system status for short), and a user operation. In an example, that the status of the electronic device changes may include at least one of the following: The process status is a non-suspended state, the process is in a background state, the system status is a non-idle state, and the user operation is no operation (for example, no tap or slide operation).

In an example, that the process status is a suspended state may be understood as that a suspended process may be defined as a process that is temporarily removed from memory in the operating system. On the contrary, that the process status is the non-suspended state may be understood as that a non-suspended process may be defined as a process that is temporarily not removed from memory in the operating system.

In an example, that a process is in a foreground state may be understood as that the process runs in the foreground. On the contrary, that a process is in the background state may be understood as that the process runs in the background.

In an example, that the system status is an idle state may be understood as that the operating system of the electronic device is powered on but does not operate. On the contrary, that the system status is the non-idle state may be understood as that the operating system of the electronic device is powered on and operates. For example, the electronic device is a mobile phone. The mobile phone may determine the system status based on code in source code.

For example, the mobile phone may determine that the system status is the idle state based on the following code in the source code: IDLE,//idle; ACTIVE,//active; HOLDING,//holding; DIALING,//dialing; ALERTING,//altering; INCOMING,//incoming; WAITING,//waiting; DISCONNECTED,//disconnected; DISCONNECTING;//disconnecting, and the like.

In an example, that there is a user operation may be understood as that the user performs a touch operation on a display of the electronic device. The touch operation may include a slide operation, a press operation, a tap operation, and the like. Certainly, the touch operation is not limited thereto, and may further include a drag operation and the like. This is not specifically limited in embodiments of this application. On the contrary, that the user operation is no operation may be understood as that the user does not perform a touch operation on the display of the electronic device.

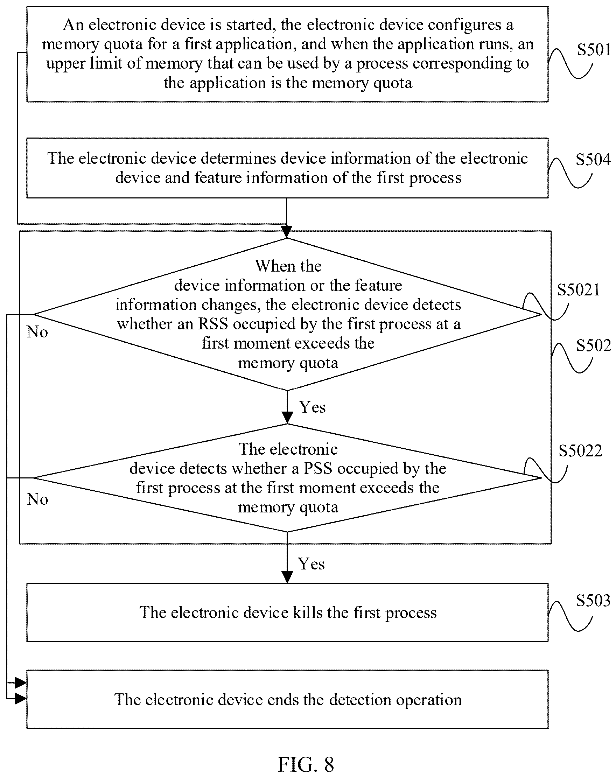

In some examples, a difference between Case 2 and Case 1 lies in that, as shown in FIG. 8, before performing S502, the electronic device further performs the following steps.

S504: The electronic device determines device information of the electronic device and feature information of the first process, where the device information of the electronic device indicates the status of the electronic device, and the feature information of the first process indicates a status of the first process.

In some examples, the device information of the electronic device includes at least one of the following: the system status and the user operation status, that is, the status of the electronic device. Certainly, the feature information in this embodiment of this application is not limited to the foregoing listed information, and may further include other information, for example, the electronic device is in a screen-off state. This is not specifically limited in embodiments of this application.

In some examples, the feature information of the first process includes at least one of the following: the process status and the foreground/background status. Certainly, the feature information in this embodiment of this application is not limited to the foregoing listed information. This is not specifically limited in embodiments of this application.

In a specific implementation, S504 may be specifically implemented as follows: The electronic device identifies the device information and the feature information. Specifically, as shown in FIG. 4, an identification module of the electronic device identifies the process status of the process in the electronic device, the foreground or background status of the process in the electronic device, the status of the operating system of the electronic device, and the user operation. For a specific implementation in which the electronic device identifies the device information and the feature information, refer to an identification manner in the conventional technology. For example, the electronic device determines a user scenario and impact on the user in the scenario based on big data analysis, to identify the feature information. Examples are not listed one by one in this embodiment of this application.

Correspondingly, S502 may be specifically implemented as follows: When the device information or the feature information changes, the electronic device performs S5021 and S5022. For specific implementations of S5021 and S5022, refer to related descriptions in the foregoing embodiments. Details are not described herein again.

In some examples, the feature information may include the process status. Correspondingly, S502 may be specifically implemented as follows: When the process status is the non-suspended state, the electronic device performs S5021 and S5022. In addition, when the process status is the suspended state, the electronic device may not detect the memory occupied by the first process.

In some examples, the feature information may include the foreground/background status. Correspondingly, S502 may be specifically implemented as follows: When the foreground/background status is a background state, the electronic device performs S5021 and S5022. In addition, when the foreground/background status is the foreground state, the electronic device may not detect the memory occupied by the first process.

In some examples, the device information may include the system status. Correspondingly, S502 may be specifically implemented as follows: When the system status is the non-idle state, the electronic device performs S5021 and S5022. In addition, when the system status is the idle state, the electronic device may not detect the memory occupied by the first process.

In some examples, the device information may include the user operation status. Correspondingly, S502 may be specifically implemented as follows: When the user operation status is a no-operation state, the electronic device performs S5021 and S5022. In addition, when the user operation status is an operation state, the electronic device may not detect the memory occupied by the first process.

Certainly, the foregoing examples may alternatively be randomly combined. This is not specifically limited in embodiments of this application.

In a specific implementation, the process status of the process in the electronic device, the foreground or background status of the process in the electronic device, the status of the operating system of the electronic device, and the user operation may be randomly combined. In addition, these pieces of information may be sorted in any order. This is not specifically limited in embodiments of this application. In this embodiment of this application, the electronic device determines, based on the status of the electronic device, whether to use the foregoing detection method to detect the memory occupied by the first process. In other words, the electronic device comprehensively considers various user scenarios, and accurately detects the memory of the process and reduces detection time consumption while ensuring minimum impact on the foreground.

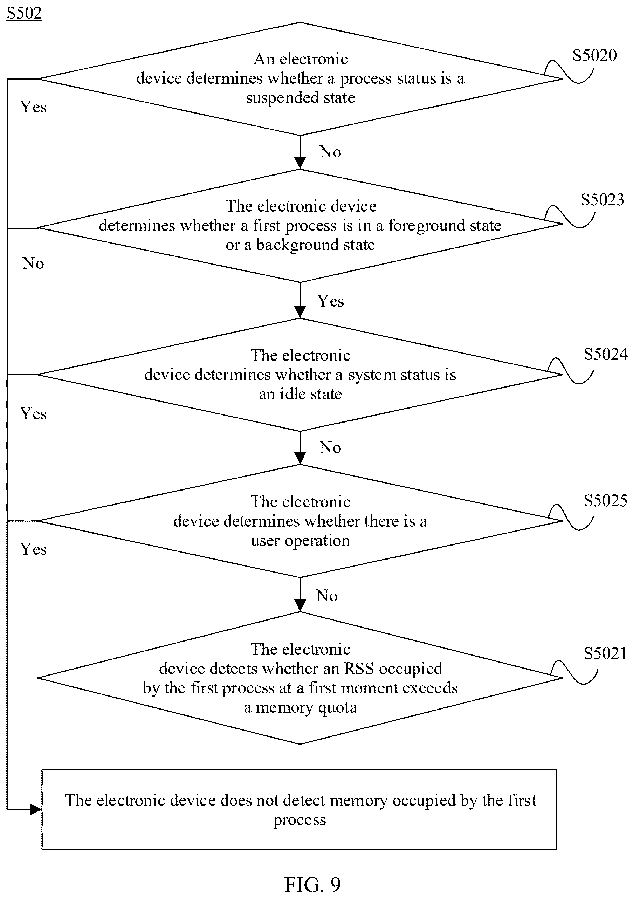

In another specific implementation, to implement optimal effect, the device information and the feature information may be determined in sequence. For example, as shown in FIG. 9, S502 may be specifically implemented as follows: S5020: The electronic device determines whether the process status is the suspended state. If the electronic device determines that the process status is the suspended state, the electronic device skips detecting the memory occupied by the first process. If the electronic device determines that the process status is the non-suspended state, the electronic device performs S5023. S5023: The electronic device determines whether the first process is in the background state. If the electronic device determines that the first process is in the foreground state, the electronic device skips detecting the memory occupied by the first process. If the electronic device determines that the first process is in the background state, the electronic device performs S5024. S5024: The electronic device determines whether the system status is the idle state. If the system status of the electronic device is the idle state, the electronic device does not detect the memory occupied by the first process. If the system status of the electronic device is the non-idle state, the electronic device performs S5025. S5025: The electronic device determines whether there is the user operation. If the electronic device determines that there is the user operation, the electronic device does not detect the memory occupied by the first process. If the electronic device determines that there is no user operation, the electronic device performs S5021 and S5022.

In an example, for impact of each electronic device on the foreground, the electronic device may separately configure a determining sequence for the process status, the foreground/background status, the system status, and the user operation. In other words, the process status may have the greatest impact on the foreground, and the electronic device may determine the process status first. Next, the foreground/background status may have greater impact on the foreground, and the electronic device may then determine the foreground/background status. Then, the system status may have slightly smaller impact on the foreground, and the electronic device may determine the system status. Finally, the user operation may have minimum impact on the foreground, and the electronic device may determine the user operation. Certainly, this example merely provides an implementable solution, and embodiments of this application is not limited thereto.

In this embodiment of this application, the electronic device determines, based on the status of the electronic device and the impact of each status on the foreground, whether to use the foregoing detection method to detect the memory occupied by the first process. In other words, the electronic device comprehensively considers various user scenarios and the impact of each status on the foreground, to accurately detect the memory of the process and reduce detection time consumption while ensuring minimum impact on the foreground.

Unless otherwise stated or there is a logic conflict, terms and/or descriptions in various embodiments of this application are consistent and may be mutually referenced, and technical features in different embodiments may be combined based on an internal logical relationship thereof, to form a new embodiment.

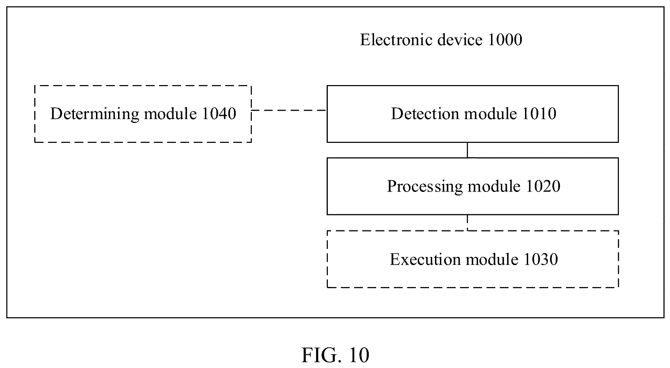

An embodiment of this application further provides an electronic device configured to implement any one of the foregoing methods. For example, an electronic device is provided, including units (or means) configured to implement steps performed by the electronic device in S501 to S504 in the foregoing methods. For example, FIG. 10 is a diagram of an electronic device according to an embodiment of this application. The electronic device 1000 may include a detection module 1010 and a processing module 1020.

The detection module 1010 is configured to detect first memory occupied by a first process, where the first memory is a resident set size RSS. For example, the detection module 1010 may perform the step S502. Specifically, the detection module 1010 may perform the step S5021. The detection module 1010 may be the processor 210 shown in FIG. 3. Specifically, the detection module 1010 may be the RSS detection unit shown in FIG. 4.

The detection module 1010 is configured to: when the first memory is greater than a first threshold, detect second memory occupied by the first process, where the second memory is a proportional set size PSS. For example, the detection module 1010 may perform the step S502. Specifically, the detection module 1010 may perform the step S5022. The detection module 1010 may be the processor 210 shown in FIG. 3. Specifically, the detection module 1010 may be the PSS detection unit shown in FIG. 4.

The processing module 1020 is configured to process the first process when the second memory is greater than the first threshold. For example, the processing module 1020 may perform the step S503. The processing module 1020 may be the processor 210 shown in FIG. 3.

In some embodiments, the electronic device 1000 further includes an execution module 1030. The execution module 1030 is configured to: when the first memory is less than or equal to the first threshold, skip performing an operation of detecting whether the second memory is greater than the first threshold. For example, the execution module 1030 may perform the step S503. The execution module 1030 may be the processor 210 shown in FIG. 3. Specifically, the execution module 1030 may be the execution module shown in FIG. 4.

In an embodiment, the detection module 1010 is configured to: when the second memory is less than or equal to the first threshold, end the detection operation.

In some embodiments, the electronic device 1000 further includes a determining module 1040. The determining module 1040 is configured to determine device information of the electronic device and feature information of the first process, where the device information of the electronic device indicates a status of the electronic device, and the feature information of the first process indicates a status of the first process. The detection module is configured to: when the device information or the feature information changes, detect the first memory occupied by the first process. For example, the determining module 1040 may perform the step S504. The determining module 1040 may be the processor 210 shown in FIG. 3. Specifically, the determining module 1040 may be the identification module shown in FIG. 4.

In an embodiment, the device information of the electronic device includes at least one of the following: a system status and a user operation status; and the feature information of the first process includes at least one of the following: a process status and a foreground/background status.

In an embodiment, the feature information of the first process includes the process status. The detection module is configured to: when the process status is a non-suspended state, detect the first memory occupied by the first process.

In an embodiment, the feature information of the first process includes the foreground/background status. The detection module is configured to: when the foreground/background status is a background state, detect the first memory occupied by the first process.

In an embodiment, the device information of the electronic device includes the system status. The detection module is configured to: when the system status is a non-idle state, detect the first memory occupied by the first process.

In an embodiment, the device information of the electronic device includes the user operation status. The detection module is configured to: when the user operation status is a no-operation state, detect the first memory occupied by the first process.

In an embodiment, the first threshold is a memory quota of the first process.

In an embodiment, the processing module 1020 is configured to: when the second memory is greater than the first threshold, perform memory detection on the first process at a preset time interval; and when a quantity of times of performing memory detection on the first process is greater than a second threshold, report the memory occupied by the first process.

In an embodiment, the processing module 1020 is configured to: when the second memory is greater than the first threshold, kill the first process.

In this application, the electronic device first detects the RSS occupied by the first process. If the RSS occupied by the first process exceeds the memory quota (namely, the first threshold), the electronic device then detects the PSS occupied by the first process. Because a range of the RSS is larger than a range of the PSS, the electronic device filters out most processes by detecting the RSS occupied by the first process, and then accurately locates, by detecting the PSS occupied by the first process, a process whose memory exceeds a quota, to improve memory detection accuracy.

It should be noted that all related content of the steps in the foregoing method embodiments may be cited in function descriptions of corresponding functional modules. Details are not described herein again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing method. The interface circuit is configured to communicate with another module other than the chip.

All or some of any features or any steps in embodiments of this application may be freely combined. A combined technical solution also falls within the scope of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In descriptions of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall be subject to the protection scope of the claims.

## Claims

1. A memory detection method, applied to an electronic device, wherein the method comprises:
detecting first memory occupied by a first process, wherein the first memory is a resident set size RSS;
when the first memory is greater than a first threshold, detecting second memory occupied by the first process, wherein the second memory is a proportional set size PSS; and
when the second memory is greater than the first threshold, processing the first process.

2. The method according to claim 1, further comprising:
when the first memory is less than or equal to the first threshold, skipping performing an operation of detecting whether the second memory is greater than the first threshold.

3. The method according to claim 1 or 2, further comprising:
when the second memory is less than or equal to the first threshold, ending the detection operation.

4. The method according to any one of claims 1 to 3, wherein before detecting the first memory occupied by the first process, the method further comprises:
determining device information of the electronic device and feature information of the first process, wherein the device information indicates a status of the electronic device, and the feature information indicates a status of the first process; and
when the device information or the feature information changes, detecting the first memory occupied by the first process.

5. The method according to claim 4, wherein the device information comprises at least one of the following: a system status and a user operation status; and the feature information comprises at least one of the following: a process status and a foreground/background status.

6. The method according to claim 5, wherein the feature information comprises the process status; and
when the feature information changes, detecting the first memory occupied by the first process comprises:
when the process status is a non-suspended state, detecting the first memory occupied by the first process.

7. The method according to claim 5 or 6, wherein the feature information comprises the foreground/background status; and
when the feature information changes, detecting the first memory occupied by the first process comprises:
when the foreground/background status is a background state, detecting the first memory occupied by the first process.

8. The method according to any one of claims 5 to 7, wherein the device information comprises the system status; and
when the device information changes, detecting the first memory occupied by the first process comprises:
when the system status is a non-idle state, detecting the first memory occupied by the first process.

9. The method according to any one of claims 5 to 8, wherein the device information comprises the user operation status; and
when the device information changes, detecting the first memory occupied by the first process comprises:
when the user operation status is a no-operation state, detecting the first memory occupied by the first process.

10. The method according to any one of claims 1 to 9, wherein the first threshold is a memory quota of the first process.

11. The method according to any one of claims 1 to 10, wherein processing the first process comprises:
when the second memory is greater than the first threshold, performing memory detection on the first process at a preset time interval; and
when a quantity of times of performing memory detection on the first process is greater than a second threshold, reporting the memory occupied by the first process.

12. The method according to any one of claims 1 to 11, wherein processing the first process comprises:
when the second memory is greater than the first threshold, killing the first process.

13. An electronic device, wherein the electronic device comprises a detection module and a processing module, wherein
the detection module is configured to detect first memory occupied by a first process, wherein the first memory is a resident set size RSS;
the detection module is configured to: when the first memory is greater than a first threshold, detect second memory occupied by the first process, wherein the second memory is a proportional set size PSS; and
the processing module is configured to process the first process when the second memory is greater than the first threshold.

14. The electronic device according to claim 13, further comprising an execution module, wherein the execution module is configured to:
when the first memory is less than or equal to the first threshold, skip performing an operation of detecting whether the second memory is greater than the first threshold.

15. The electronic device according to claim 13 or 14, wherein the detection module is configured to:
when the second memory is less than or equal to the first threshold, end the detection operation.

16. The electronic device according to any one of claims 13 to 15, further comprising a determining module, wherein
the determining module is configured to determine device information of the electronic device and feature information of the first process, wherein the device information indicates a status of the electronic device, and the feature information indicates a status of the first process; and
the detection module is configured to: when the device information or the feature information changes, detect the first memory occupied by the first process.

17. The electronic device according to claim 16, wherein the device information comprises at least one of the following: a system status and a user operation status; and the feature information comprises at least one of the following: a process status and a foreground/background status.

18. The electronic device according to claim 17, wherein the feature information comprises the process status, and the detection module is configured to:
when the process status is a non-suspended state, detect the first memory occupied by the first process.

19. The electronic device according to claim 17 or 18, wherein the feature information comprises the foreground/background status, and the detection module is configured to:
when the foreground/background status is a background state, detect the first memory occupied by the first process.

20. The electronic device according to any one of claims 17 to 19, wherein the device information comprises the system status, and the detection module is configured to:
when the system status is a non-idle state, detect the first memory occupied by the first process.

21. The electronic device according to any one of claims 17 to 20, wherein the device information comprises the user operation status, and the detection module is configured to:
when the user operation status is a no-operation state, detect the first memory occupied by the first process.

22. The electronic device according to any one of claims 13 to 21, wherein the first threshold is a memory quota of the first process.

23. The electronic device according to any one of claims 13 to 22, wherein the processing module is configured to:
when the second memory is greater than the first threshold, perform memory detection on the first process at a preset time interval; and
when a quantity of times of performing memory detection on the first process is greater than a second threshold, report the memory occupied by the first process.

24. The electronic device according to any one of claims 13 to 23, wherein the processing module is configured to:
when the second memory is greater than the first threshold, kill the first process.

25. An electronic device, wherein the electronic device comprises one or more processors and a storage, the storage stores code, and when the code is executed by the processor, the electronic device is enabled to perform the method according to any one of claims 1 to 12.

26. A computer-readable storage medium, comprising computer instructions, wherein when the computer instructions are run on an electronic device, the electronic device is enabled to perform the method according to any one of claims 1 to 12.
